# EUROPÄISCHE PATENTSCHRIFT

(11) **EP 4 413 278 B1**
(45) Veröffentlichungstag und Bekanntmachung des Hinweises auf die Patenterteilung: **09.12.2026**
(21) Anmeldenummer: 22801384.3
(22) Anmeldetag: 06.10.2022
(51) Int. Cl.: F16D 65/097, F16D 69/04, B61H 5/00, F16D 55/224

(54) **BREMSBELAG FÜR EINE TEILBELAG-SCHEIBENBREMSE EINES SCHIENENFAHRZEUGS UND ANORDNUNG EINES BREMSBELAGS EINER TEILBELAG-SCHEIBENBREMSE EINES SCHIENENFAHRZEUGES AN EINEM BELAGHALTER**
BRAKE LINING FOR A PARTIALLY LINED DISC BRAKE OF A RAIL VEHICLE AND ARRANGEMENT OF A BRAKE LINING OF A PARTIALLY LINED DISC BRAKE OF A RAIL VEHICLE ON A LINING HOLDER
GARNITURE DE FREIN POUR FREIN À DISQUE À GARNITURE PARTIELLE D'UN VÉHICULE FERROVIAIRE ET AGENCEMENT D'UNE GARNITURE DE FREIN D'UN FREIN À DISQUE À GARNITURE PARTIELLE D'UN VÉHICULE FERROVIAIRE SUR UN PORTE-GARNITURE

(30) Priorität: 06.10.2021 DE 102021125953
(43) Veröffentlichungstag der Anmeldung: 14.08.2024
(73) Patentinhaber: KNORR-BREMSE Systeme für Schienenfahrzeuge GmbH, 80809 München (DE)
(72) Erfinder: HÄMMERL, Bernhard, 82216 Maisach (DE); LANGWADT, Marco, 80992 München (DE); KLEEBERGER, Peter, 82178 Puchheim (DE)
(86) Internationale Anmeldenummer: PCT/EP2022/077870
(87) Internationale Veröffentlichungsnummer: WO 2023/057600

(56) Entgegenhaltungen:
- EP-A2- 1 717 475
- EP-A2- 2 088 050
- DE-U1- 20 011 076
- DE-U1- 202013 101 402

## Beschreibung

Die vorliegende Erfindung betrifft einen Bremsbelag für eine Teilbelag-Scheibenbremse eines Schienenfahrzeugs gemäß dem Oberbegriff des Anspruchs 1. Die Erfindung betrifft des Weiteren eine Anordnung eines solchen Bremsbelags an einem Belaghalter.

Ein gattungsgemäßer Bremsbelag ist beispielsweise aus der EP 0784761 B1, der WO 03098068 A1 oder der EP 1 717 475 A2 bekannt.

Bei einem solchen Bremsbelag wird durch die Aufteilung der Gesamtbelagfläche in eine Vielzahl von Reibelementen und eine statisch bestimmte Übertragung der Zuspannkraft von einem Zangenhebel bis auf die Reibelemente ein sehr gleichmäßiger Wärmeeintrag in die Bremsscheibe erzielt, gegen die die Reibelemente des Bremsbelags beim Zuspannen gedrückt werden.

Die Zangenhebelkraft wird von einem Belaghalter gleichmäßig auf einen Belagträger des Bremsbelags übertragen. Diese Zangenhebelkraft wird dabei jeweils über mehrere sphärisch am Belagträger gelagerte Trägerbleche abgestützt.

An jedem der Trägerbleche sind wiederum sphärisch gelagerte Reibelemente gelagert, welche mitsamt des Trägerblechs über jeweils ein eigenes elastisches Federelement am Belagträger vorgespannt gehalten werden. Ein solches Trägerblech mit in sphärischen Lagern gehaltenen Reibelementen wird auch als Gruppenelement bezeichnet.

Gemäß der oben genannten EP 0784761 B1 können die elastischen Federelemente als Tellerfedern oder als Druckfedern ausgebildet sein.

Aus der WO 03098068 A1 ist auch eine Ausführung der Federelemente als Runddrahtformfedern bekannt. Diese Runddrahtformfedern bestehen jeweils aus einem einteilig gebogenen Draht, bei dem die freien Enden als Schenkel symmetrisch zueinander auslaufen.

Die Schenkel haben dabei gegenüber dem übrigen tragenden Bereich der Runddrahtformfeder eine erhöhte Lage, sprich die Schenkel sind aus einer Ebene des am Belagträger anliegenden Teils der Runddrahtfeder herausgebogen.

Dadurch ist bei einer vertikalen Verschiebung, die beim Schwenken des Trägerbleches und/oder des Reibelements zustande kommt, eine elastische Federung möglich.

Durch die Schwenkbewegung kommt es zu Verschiebungen des Federelements am Belagträger, wobei das Federelement ohne größere Verformung auf der Auflagefläche des Belagträgers reibungsbehaftet rutscht.

Die Federschenkel einer solchen Runddrahtfeder erfahren im Allgemeinen eine taumelnde Schwenkbewegung in Folge der prinzipbedingten Bewegung der Reibelemente während des Reibprozesses des Bremsbelags. Dazu wird aus Festigkeits- und Steifigkeitsgründen eine vorbestimmte Dicke für den Kreisquerschnitt des Runddrahtes benötigt, aus dem die Runddrahtfeder gefertigt ist.

Da die Runddrahtfeder innerhalb des Belagträgers angeordnet sein muss, wird die Dicke des Belagträgers im Stand der Technik daher aus dafür Raum schaffenden Gründen hinsichtlich Festigkeit und Steifigkeit überdimensioniert.

Dies bedingt, dass der Verschleißvorrat der Reibelemente, sprich die Dicke der Reibelemente unter Beibehaltung der limitierenden Gesamtbauhöhe des Bremsbelags nicht weiter erhöht werden kann.

Aufgabe der vorliegenden Erfindung ist es, einen Bremsbelag der gattungsgemäßen Art dahingehend zu optimieren, dass der Verschleißvorrat der Reibelemente gesteigert werden kann, ohne die mechanischen Eigenschaften hinsichtlich der gleichmäßigen Druckverteilung auf die Bremsscheibe zu beeinflussen.

Diese Aufgabe wird durch einen Bremsbelag für eine Teilbelag-Scheibenbremse eines Schienenfahrzeugs mit den Merkmalen des Anspruchs 1 gelöst.

Der erfindungsgemäße Bremsbelag weist einen Belagträger auf, mehrere am Belagträger sphärisch gelagerte Trägerbleche sowie mehrere am jeweiligen Trägerblech sphärisch gelagerte Reibelemente.

Jedes der Reibelemente weist ein eine Öffnung des Trägerbleches und eine Öffnung des Belagträgers durchsetzendes Halteelement auf, an dem ein Federelement abgestützt ist.

Jedes der Reibelemente ist mittels des Federelements gegenüber dem Belagträger verspannt.

Das Federelement ist als durch einachsig gekrümmte Bereiche mit parallelen Krümmungsachsen vorgeformte Blattfeder ausgebildet.

Dabei weist das Federelement eine Vorspannfläche auf, von der sich beidseits in einer Richtung senkrecht zu den parallelen Krümmungsachsen Abstützbereiche erstrecken, wobei die Vorspannfläche eine das Halteelement zumindest teilweise umgreifende Aussparung aufweist.

Mit einem solchermaßen ausgebildeten Bremsbelag ist aufgrund der als Blattfeder ausgebildeten Federelemente eine Erhöhung des Verschleißvorrats der Reibelemente ermöglicht. Ein direkter Nutzen daraus besteht in der Erhöhung der Nutzungsdauer des Bremsbelags, was eine Minimierung der Lebensdauerkosten bei den Nutzern solcher Bremsbeläge zur Folge hat.

Durch die einachsigen Biegungen des als Blattfeder ausgebildeten Federelements ist der für einen Bremsvorgang erforderliche Federweg sowie die nötige Steifigkeit des Federelements bei kleinerem Platzbedarf insbesondere gegenüber der zuvor beschriebenen Runddrahtfeder, aber auch gegenüber aus dem Stand der Technik bekannten Tellerfedern ermöglicht.

Dementsprechend kann die Einbauhöhe der Reibelemente innerhalb des Belagträgers in dem Maß verringert werden, welches den Dickenunterschied der im erfindungsgemäßen Bremsbelag eingesetzten Blattfedern gegenüber der Runddrahtfeder oder der Tellerfeder entspricht.

Vorteilhafte Ausführungsvarianten der Erfindung sind Gegenstand der Unteransprüche.

Gemäß einer vorteilhaften Ausführungsvariante schließt jeder der Abstützbereiche an einen ersten an die Vorspannfläche anschließenden gekrümmten Bereich und an einen zweiten gegensinnig gekrümmten Bereich an.

Gemäß einer vorteilhaften Weiterbildung erstreckt sich von wenigstens einem der zweiten gegensinnig gekrümmten Bereiche eine relativ zum Abstützbereich angewinkelte Zunge.

Eine solche Zunge ermöglicht ein einfaches Einfädeln bei der Montage des Federelements.

Gemäß einer vorteilhaften Ausführungsvariante der Erfindung ist ein erster Abstützbereich des Federelements durch einen sich in einer Richtung senkrecht zu den parallelen Krümmungsachsen erstreckenden Aufnahmeschlitz in zwei Abstützstege aufgeteilt, wobei sich der Aufnahmeschlitz unter Ausbildung der das Halteelement zumindest teilweise umgreifenden Aussparung zumindest bis in die Vorspannfläche erstreckt.

Dadurch ist ein einfaches Aufschieben des Federelements auf das durch die Öffnungen des Trägerbleches und des Belagträgers durchsetzendes Halteelement aufschiebbar.

Der Aufnahmeschlitz kann dabei gemäß einer Ausführungsvariante einen geradlinigen Einführungsabschnitt mit konstanter Schlitzbreite aufweisen.

Ein solchermaßen geformtes Federelement ist in besonders einfacher Weise zu fertigen.

In einer alternativen Ausführungsvariante weist der Aufnahmeschlitz einen Einführungsabschnitt mit variierender Schlitzbreite auf.

Dadurch ist ermöglicht, die den Schlitz begrenzenden Wandung so zu gestalten, dass während der Montage, bei der das Federelement auf das Halteelement aufgeschoben wird, die durch den Schlitz getrennten Abstützstege auseinander gedrückt werden, um nach Passieren einer Engstelle zurück in ihre Ausgangsstellung zurück zu federn und so das Federelement in seiner Montageendstellung am Halteelement quasi verrasten.

Denkbar ist es auch, gemäß einer weiteren Ausführungsvariante, dass sich der Aufnahmeschlitz bis in den zweiten Abstützbereich erstreckt.

Besonders bevorzugt weist der Aufnahmeschlitz drei Schlitzbereiche auf, die durch Engstellen voneinander getrennt sind.

Gemäß einer nochmals alternativen Ausführungsvariante ist die Aussparung in der Vorspannfläche des Federelements als eine ein Kopfteil des Halteelements vollständig umgreifende Aufnahmeöffnung ausgebildet.

Das Federelement ist bevorzugt bei der letzten genannten Ausführungsvariante mit einem Kopfteil des Halteelements vernietet.

Eine solchermaßen ausgebildete Blattfeder kann dabei durch Aufbohren des Nietkopfes des Halteelements demontiert werden, um den Bremsbelag im Rahmen einer Überholung des Bremsbelags mit neuen Reibelementen auszustatten.

Die Federelemente sind gemäß einer weiteren bevorzugten Ausführungsvariante in jeweiligen Ausnehmungen des Belagträgers auf einer den Trägerblechen abgewandten Seite aufgenommen, in die die jeweiligen Öffnungen des Belagträgers münden, wobei die Ausnehmungen so bemessen sind, dass das jeweilige Federelement in der Ebene eines Bodens der Ausnehmung in allen Richtungen verschiebbar ist.

Dies ermöglicht, dass eine Schwenkbewegung des fest mit dem Reibelement verbundenen Halteelements eine Schwenkbewegung ausführen kann, ohne dass durch die Geometrie der Ausnehmung eine solche Schwenkbewegung eingeschränkt oder behindert wäre.

Bei der erfindungsgemäßen Anordnung eines Bremsbelags einer Teilbelag-Scheibenbremse eines Schienenfahrzeuges an einem Belaghalter ist der Bremsbelag wie oben beschrieben ausgebildet.

Nachfolgend werden bevorzugte Ausführungsbeispiele der Erfindung anhand der beiliegenden Zeichnungen näher erläutert. Es zeigen:
- Fig. 1: eine isometrische Darstellung einer Ausführungsvariante eines Bremsbelags mit an diesem angeordneten Trägerblechen und Reibelementen,
- Fig. 2: eine schematische Ansicht der den Reibelementen abgewandten Unterseite des Belagträgers mit daran angeordneten Federelementen,
- Fig. 3: eine schematische Schnittansicht entlang einer in Figur 2 mit III gekennzeichneten Schnittlinie,
- Fig. 4: eine weitere Schnittansicht durch einen Bereich des Bremsbelags mit senkrecht zum Schnitt gemäß Fig. 3 ausgerichteter Schnittrichtung,
- Fig. 5: eine isometrische Einzeldarstellung einer Ausführungsvariante eines Federelements,
- Fig. 6: eine Seiten-Schnittansicht entlang einer Längsachse des in Fig. 5 gezeigten Federelements,
- Fig. 7: eine Schnittansicht durch einen Ausschnitt des Bremsbelags mit montiertem Federelement gemäß Fig. 5 und 6,
- Fig. 8: eine der Fig. 7 entsprechende Schnittansicht zur Darstellung der Montage des Federelements gem. Fig. 5 und 6,
- Fig. 9 und 10: den Fig. 5 und 6 entsprechende Darstellungen einer alternativen Ausführungsvariante eines Federelements,
- Fig. 11: eine Draufsicht auf einen Ausschnitt des Belagträgers mit daran montiertem Federelement gem. Fig. 9 und 10,
- Fig. 12: eine der Fig. 8 entsprechende Schnittdarstellung mit in einer Montagezwischenposition angeordnetem Federelement,
- Fig. 13 und 14: den Fig. 11 und 12 entsprechende Darstellungen mit Federelement in der Gebrauchsstellung,
- Fig. 15: eine Draufsicht auf eine weitere alternative Ausführungsvariante eines Federelements mit das Halteelement vollständig umgreifende Aufnahmeöffnung vor dem Verstemmen des Federelements,
- Fig. 16: eine Seiten-Schnittansicht zur Darstellung der Montage des in Fig. 15 gezeigten Federelements vor dem Verstemmen des Federelements und
- Fig. 17 und 18: den Fig. 15 und 16 entsprechende Darstellungen des Federelements im vernieteten Zustand.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsbelags, Belagträgers, Trägerbleches, Reibelements, Federelements, Halteelements und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

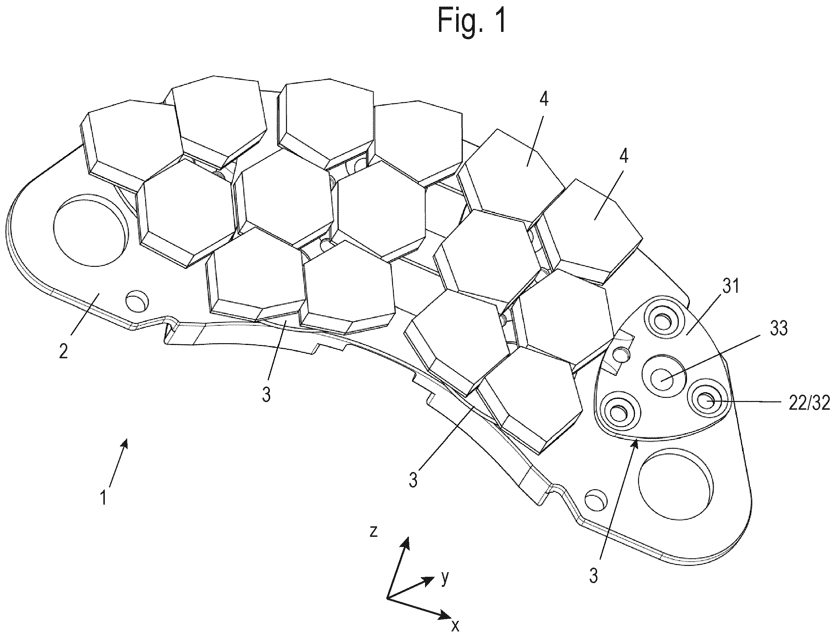

In Fig. 1 ist mit dem Bezugszeichen 1 insgesamt ein Bremsbelag für eine Teilbelag-Scheibenbremse eines Schienenfahrzeugs bezeichnet. Der Bremsbelag 1 weist einen Belagträger 2 auf, an dem mehrere Trägerbleche 3 sphärisch gelagert sind.

In jedem der Trägerbleche 3 sind mehrere Reibelemente 4 sphärisch gelagert.

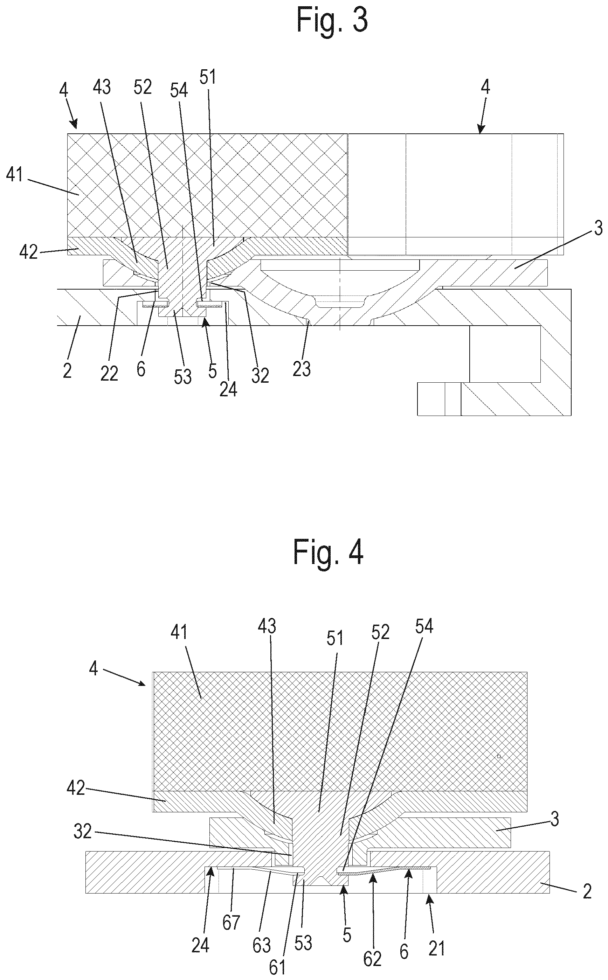

Zur sphärischen Lagerung der Trägerbleche 3 am Belagträger 2 sind in einer sich einer X-Y-Ebene erstreckenden Auflagefläche des Belagträgers 2 kalottenförmige Pfannen angeformt, in die entsprechend geformte kugelkalottenförmige Erhebungen der Trägerbleche 3 aufgenommen sind, wie es in **Figur 3** beispielhaft dargestellt ist.

In entsprechender Weise ist auch die sphärische Lagerung der Reibelemente 4 am jeweiligen Trägerblech 3 ausgebildet.

Wie in **Figur 4** dargestellt, besteht jedes der Reibelemente 4 aus einem Reibbelag 41 und einer Reibelementplatte 42, an deren dem Reibbelag 41 abgewandten Seite eine Kugelkalotte 43 angeformt ist. Auf der dem Reibbelag 41 zugewandten Seite der Reibelementplatte 42 ist in der Kugelkalotte 43 unterhalb des Reibbelags 41 eine Kugelkalotte 51 eines Halteelements 5 aufgenommen.

Dieses Halteelement 5 weist ein sich zentral von der Kugelkalotte 51 durch eine Öffnung 32 im Trägerblech 3 und eine Öffnung 22 im Belagträger 2 vorstehendes Halsteil 52 auf, dessen freies Ende, nachfolgend als Kopfteil 53 bezeichnet, durch ein Federelement 6 gegenüber dem Belagträger 2 verspannt ist.

Das Federelement 6 ist dabei in einer Ausnehmung 21 des Belagträgers 2 auf einer den Trägerblechen 3 abgewandten Seite des Belagträgers 2 aufgenommen.

In diese Ausnehmungen 21 münden die jeweiligen Öffnungen 22 des Belagträgers 2.

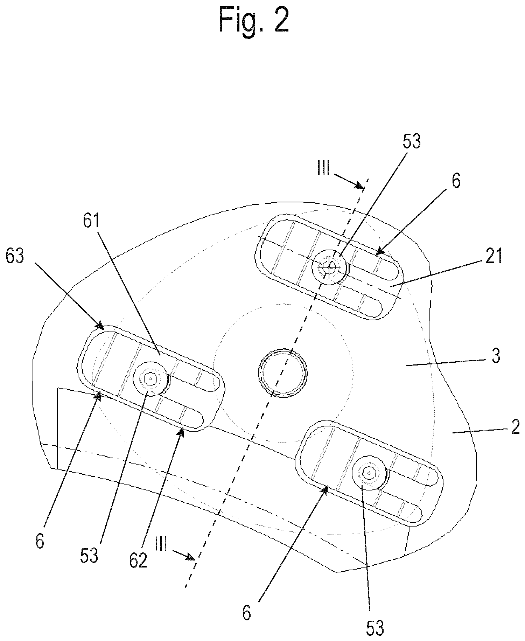

Die Ausnehmungen 21 sind dabei bevorzugt so bemessen, dass das jeweilige Federelement 6 in der Ebene eines Bodens 24 der Ausnehmung 21 in alle Richtungen verschiebbar ist, wie es beispielhaft in **Figur 2** gezeigt ist.

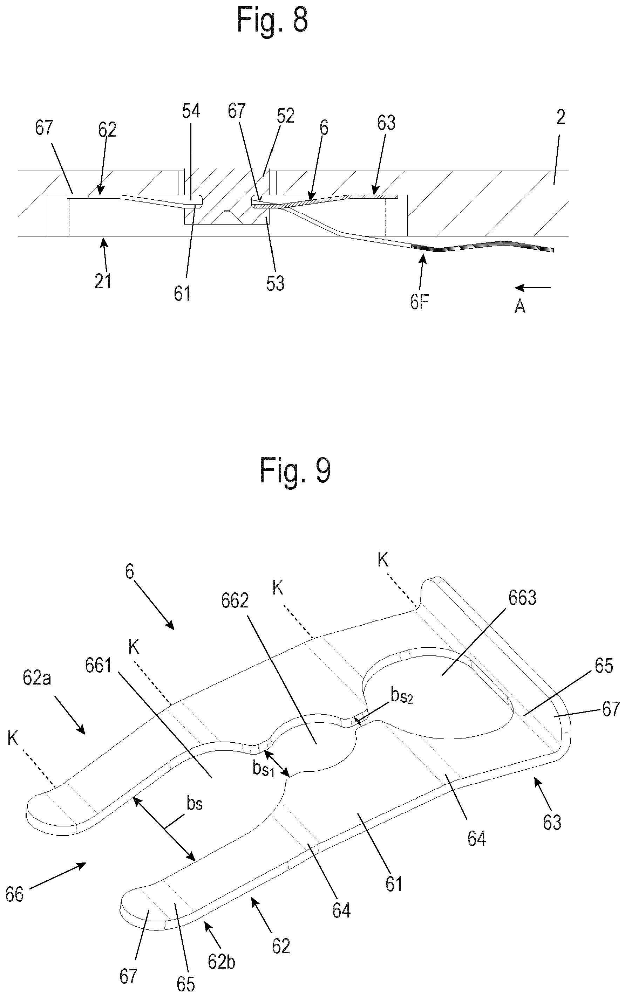

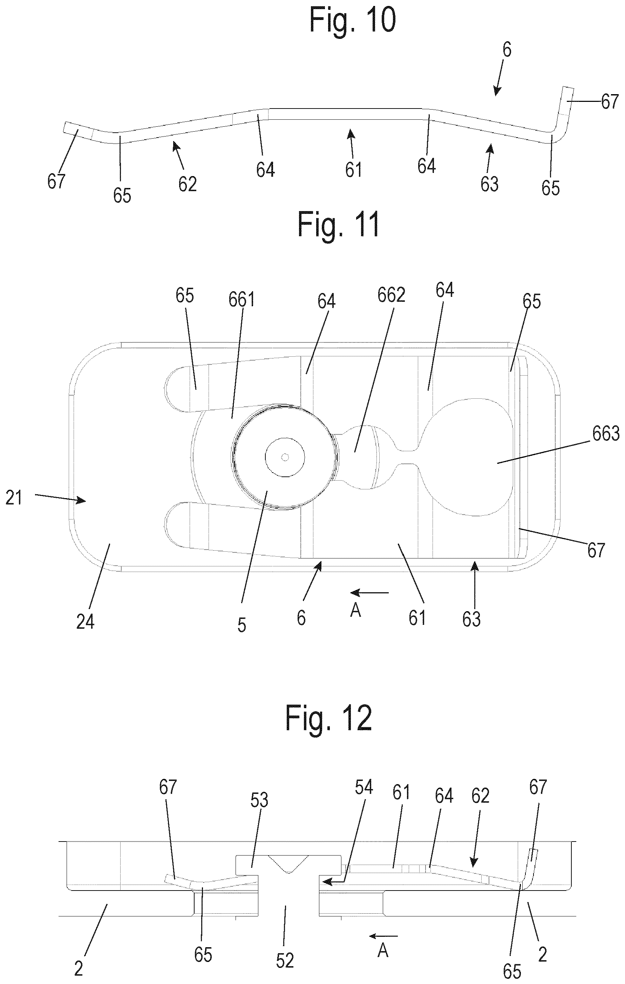

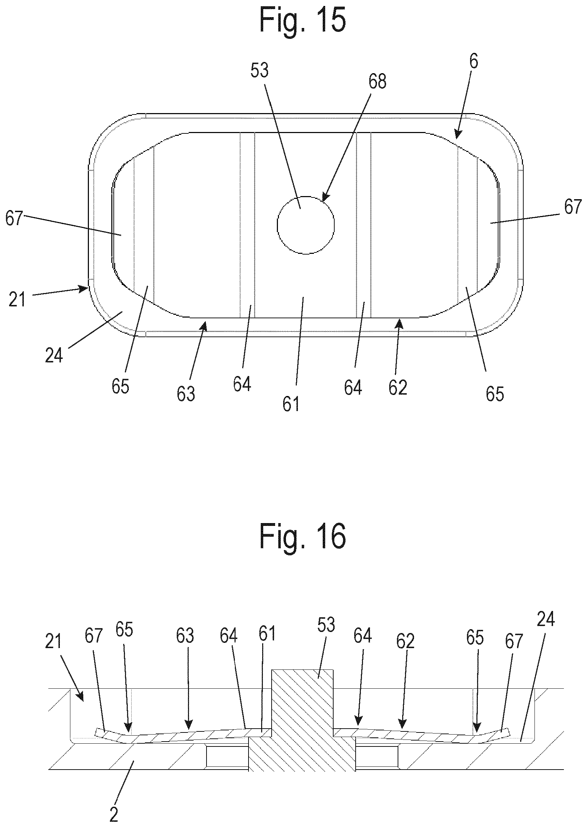

Die **Figuren** 2 und **5****-8** zeigen eine erste Ausführungsvariante eines solchen Federelements 6. Die **Figuren 9-14** zeigen eine zweite Ausführungsvariante eines solchen Federelements 6. Die **Figuren 15-18** zeigen eine nochmals weitere Ausführungsvariante eines solchen Federelements 6.

Allen Ausführungsvarianten des Federelements 6 gemeinsam ist, dass das Federelement 6 als durch einachsig gekrümmte Bereiche 64, 65 mit parallelen Krümmungsachsen vorgeformte Blattfeder ausgebildet ist.

Das Federelement 6 weist dabei eine Vorspannfläche 61 auf, von der sich beidseits in einer Richtung A senkrecht zu den parallelen Krümmungsachsen K Abstützbereiche 62, 63 erstrecken.

Die Vorspannfläche 61 jedes der Federelemente 6 weist eine das Halteelement 5 zumindest teilweise umgreifende Aussparung auf.

Durch das Umgreifen des Halteelements 5 wird jedes der Reibelemente 4 am Belagträger 2 so verspannt, dass eine Schwenkbewegung des Reibelements 4 ermöglicht ist.

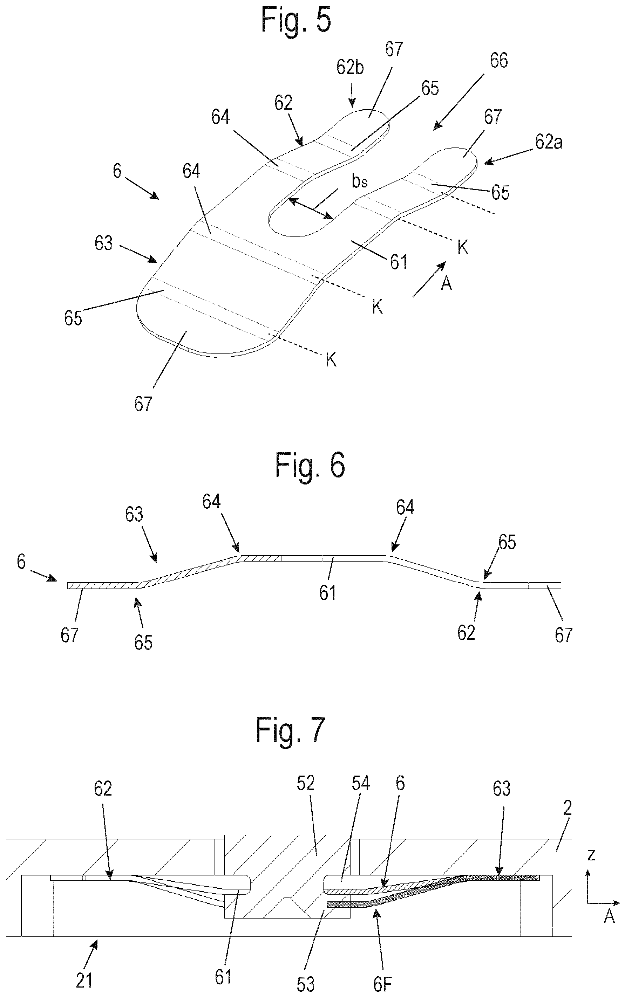

Den unterschiedlichen Ausführungsvarianten des Federelements 6 ist auch gemeinsam, dass, wie beispielsweise in den Figuren 6, 10 und 16 gut erkennbar ist, sich jeder der Abstützbereiche 62, 63 an einen ersten an die Vorspannfläche 61 anschließenden gekrümmten Bereich 64 und an einen zweiten gegensinnig gekrümmten Bereich 65 anschließt.

Bei den in den Figuren 5 - 8 und Figuren 9-14 gezeigten beiden Ausführungsvarianten des Federelements 6 ist ein erster Abstützbereich 62 des Federelements 6 durch einen sich in Richtung A senkrecht zu den parallelen Krümmungsachsen K erstreckenden Aufnahmeschlitz 66 in zwei Abstützstege 62a, 62b aufgeteilt.

Der Aufnahmeschlitz 66 erstreckt sich unter Ausbildung der das Halteelement 5 zumindest teilweise umgreifenden Aussparung zumindest bis in die Vorspannfläche 61 des Federelements 6.

Der zweite Abstützbereich 63 dient bei dieser Ausführungsvariante als Verbindungssteg.

Die beiden Abstützstege 62a, 62b umgeben in der Montageposition, wie sie in den Fig. 7 und 8 gezeigten Schnittdarstellung dargestellt ist, das Halsteil 52 des Halteelements 5 eines Reibelements 4 vorspannungsfrei oder nahezu vorspannungsfrei.

Zum Vergleich zeigt Fig. 7 das Federelement 6 im verspannten Montagezustand und einmal, durch das Bezugszeichen 6F markiert, im unverspannten Fertigungszustand.

Zur sicheren Halterung des Federelements 6 am Halteelement 5 ist, wie in den Figuren 7 und 8 dargestellt, im Kopfteil 53 des Halteelements 5 eine Aufnahmenut 54 angeformt, die so bemessen ist, dass das Federelement 6, wie in Fig. 8 dargestellt ist, bei der Montage durch Vorschieben des Federelements 6 in Richtung A in die Aussparung 21 des Belagträgers 2 und dann in die Aufnahmenut 54 des Halteelements 5 bis in die Montageendlage, wie sie in Fig. 8 durch das mit dem Bezugszeichen 6 markierte Federelement 6 dargestellt ist, aufgeschoben werden kann.

Auch in der Fig. 8 ist das Federelement 6 zusätzlich durch das Bezugszeichen 6F (Federelement im unverspannten Fertigungszustand) dargestellt in einer Montageposition gezeigt, bei der eine Zunge 67 eines der Abstützstege 62a, 62b in die Aufnahmenut 54 des Halteelements 5 eintaucht und anschließend in Richtung A in die Montageendstellung verschoben wird, um die Position des Federelement 6 in Figur 8 zu erreichen.

Eine in Fig. 5 gezeigte Schlitzbreite bs ist dabei geringfügig größer als der Querschnitt des Halsteils 52 des Halteelements 5 im Bereich der Aufnahmenut 54.

Bei der in den Figuren 5 - 8 gezeigten Ausführungsvariante des Federelements 6 weist der Aufnahmeschlitz 66 einen geradlinigen Einführungsabschnitt mit konstanter Schlitzbreite bs auf.

Bei der in den Figuren 9 - 14 gezeigten Ausführungsvariante des Federelements 6 weist der Aufnahmeschlitz 66 einen Einführungsabschnitt mit variierender Schlitzbreite bs auf.

Die Zungen 67 an den Enden des Federelements 6 bieten während der Montage der Federelemente 6 vorteilhaft eine Greiffläche für manuelles oder auch vollautomatisiertes Montieren.

Wie weiter insbesondere in Fig. 9 erkennbar ist, erstreckt sich der der Aufnahmeschlitz 66 bei dieser Ausführungsvariante bis in den zweiten Abstützbereich 63.

Der Aufnahmeschlitz 66 ist bei dieser Ausführungsvariante, wie in Fig. 9 dargestellt ist, im Wesentlichen in drei Schlitzbereiche 661, 662, 663 aufgeteilt.

Der erste Schlitzbereich 661 ist dabei bis zu einer ersten Engstellte b_{S1} in seiner Schlitzbreite bs so ausgeführt, dass die Abstützstege 62a, 62b so weit voneinander beabstandet sind, dass diese das Halsteil 52 des Halteelements 5 zur Erleichterung eines Einfädelns auch in einem Bereich oberhalb oder unterhalb der Aufnahmenut 54 (in z-Richtung betrachtet) umgreifen können. Durch weiteres Aufschieben des Federelement 6 in Richtung A werden die beiden Abstützstege 62a, 62b durch Anlage des Halsteils 52 des Halteelements 5 an die den Schlitz 66 begrenzenden Innenkanten der Abstützstege 62a, 62b so weit auseinander gedrückt, dass die erste Engstelle b_{S1} so weit aufgeweitet wird, dass das Halsteil 52 des Halteelements 5 im Bereich seines Schlitzes 54 passieren und in den zweiten Schlitzbereich 662 vorgeschoben werden kann.

Sobald das Halsteil 52 des Halteelements 5 die erste Engstelle b_{S1} passiert hat und im zweiten Schlitzbereich 662 einliegt, federn die Abstützstege 62a, 62b zurück in ihre Ausgangsstellung und erzeugen so eine feste Halte- oder Rastposition des Federelements 6 am Halteelement 5.

Eine zweite Engstellte b_{S2} verhindert ein Weiterschieben des Federelements 6 in den dritten Schlitzbereich 663. Die Fortsetzung des Aufnahmeschlitzes 66 in den dritten Bereich 663 erleichtert jedoch das Aufspreizen der Abstützstege 62a, 62b.

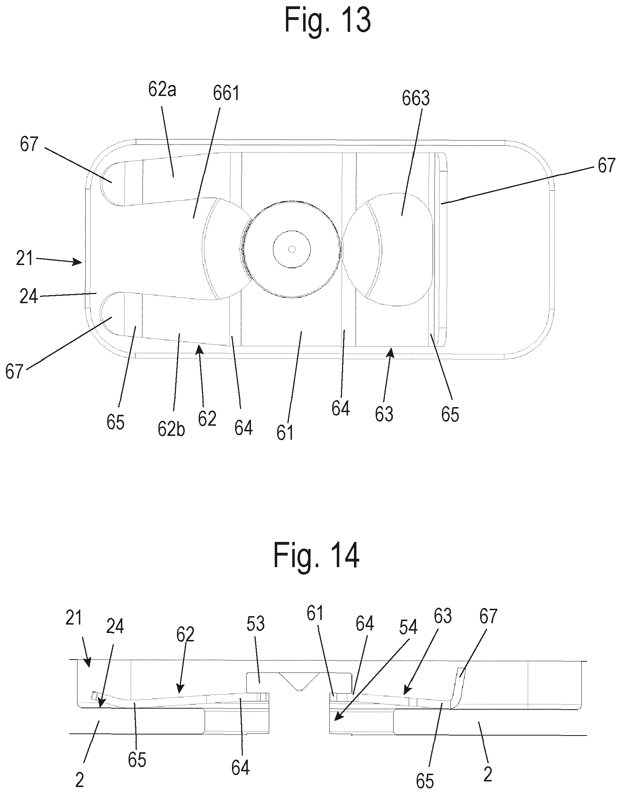

In der Endmontagestellung liegt das Halsteil 52 des Halteelements 5 im Bereich des zweiten Bereichs 662 des Federelements 6, wie es in den Figuren 13 und 14 dargestellt ist.

Die Zungen 67 beidseits der gekrümmten Bereiche 65 des Federelements 6 sind bei der in den Fig. 9-14 gezeigten Ausführungsvariante des Federelements 6 stärker angewinkelt als die Zungen 67 der Ausführungsvariante gemäß Figuren 5-8, bei denen die Zungen 67 auch als Auflageflächen des Federelements 6 am Boden 24 der Aussparung 21 des Belagträgers 2 dienen.

Bei dem Federelement 6 gemäß Figuren 9-14 stützt sich das Federelement 6 in den jeweiligen gekrümmten Bereichen 65 am Boden 24 der Aussparung 21 des Belagträgers 2 ab.

Die in den Figuren 15-18 gezeigte Ausführungsvariante des Federelements 6 weist eine Aussparung in der Vorspannfläche 61 des Federelements 6 auf, das als ein Kopfteil 53 des Halteelements 5 vollständig umgreifende Aufnahmeöffnung 68 ausgebildet ist.

Dieses Federelement 6 weist demgemäß keinen Aufnahmeschlitz 66 auf.

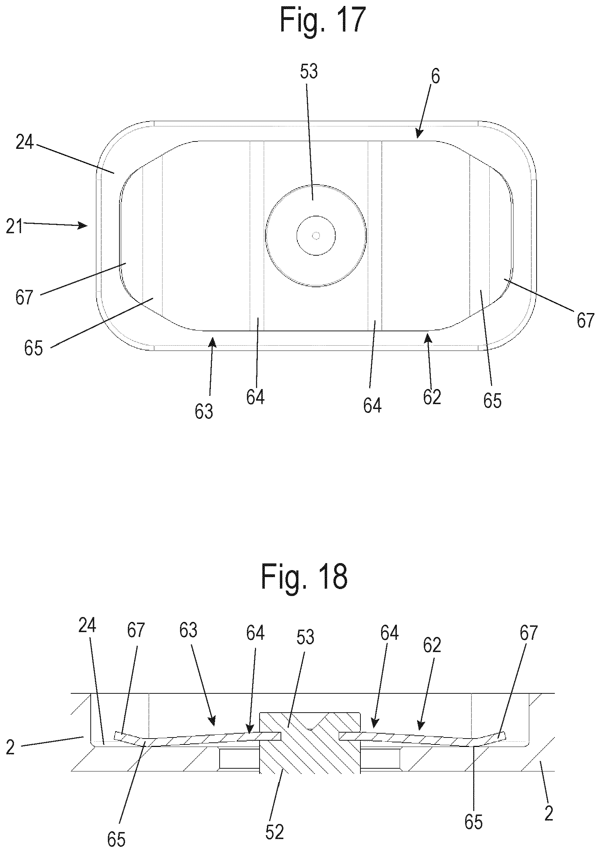

Zur Montage dieses Federelements 6 wird dieses mit der Aufnahmeöffnung 68 bei der Montage auf ein als Kopf ausgebildetes Kopfteil 53 des Halteelements 5 aufgestülpt, wie es in Fig. 16 dargestellt ist, und anschließend vernietet, wie es in Fig. 18 dargestellt ist.

Um ein Reibelement 4, das durch ein solches Federelement mit dem Belagträger 2 verspannt ist, zu demontieren, kann das als Nietkopf ausgebildete Kopfteil 53 des Halteelements 5 aufgebohrt werden.

### BEZUGSZEICHENLISTE

- 1: Bremsbelag

- 2: Belagträger
- 21: Aussparung
- 22: Öffnung
- 23: Öffnung
- 24: Boden

- 3: Trägerblech
- 31: Öffnung
- 32: Öffnung

- 4: Reibelement
- 41: Reibbelag
- 42: Reibelementplatte
- 43: Kugelkalotte

- 5: Halteelement
- 51: Kugelkalotte
- 52: Halsteil
- 53: Kopfteil
- 54: Aufnahmenut

- 6: Federelement
- 61: Vorspannfläche
- 62: Abstützbereich
- 62a, b: Abstützsteg
- 63: Abstützbereich
- 64: gekrümmter Bereich
- 65: gekrümmter Bereich
- 66: Aufnahmeschlitz
- 661: erster Bereich
- 662: zweiter Bereich
- 663: dritter Bereich
- 67: Zunge
- 68: Aufnahmeöffnung
- bs: Schlitzbreite
- b_{S1}: erste Engstelle
- b_{S2}: zweite Engstelle

- 6F: Federelement im unverspannten Fertigungszustand
- A: Richtung
- K: Krümmungsachse

## Patentansprüche

1. Bremsbelag (1) für eine Teilbelag-Scheibenbremse eines Schienenfahrzeuges, aufweisend
- einen Belagträger (2),
- mehrere am Belagträger (2) sphärisch gelagerte Trägerbleche (3),
- mehrere am jeweiligen Trägerblech (3) sphärisch gelagerte Reibelemente (4),
- wobei jedes der Reibelemente (4) ein eine Öffnung (32) des Trägerbleches (3) und eine Öffnung (22) des Belagträgers (2) durchsetzendes Halteelement (5) aufweist, an dem ein Federelement (6) abgestützt ist, wobei jedes der-Reibelemente-(4) mittels des Federelements (6) gegenüber dem Belagträger (2) verspannt ist,
**dadurch gekennzeichnet, dass**
- das Federelement (6) als durch einachsig gekrümmte Bereiche (64, 65) mit parallelen Krümmungsachsen (K) vorgeformte Blattfeder ausgebildet ist,
- wobei das Federelement (6) eine Vorspannfläche (61) aufweist, von der sich beidseits in einer Richtung (A) senkrecht zu den parallelen Krümmungsachsen (K) Abstützbereiche (62, 63) erstrecken,
- wobei die Vorspannfläche (61) eine das Halteelement (5) zumindest teilweise umgreifenden Aussparung aufweist.

2. Bremsbelag nach Anspruch 1, **dadurch gekennzeichnet, dass** jeder der Abstützbereiche (62, 63) einen ersten gekrümmten Bereich (64) und einen zweiten gegensinnig gekrümmten Bereich (65) aufweist, wobei der erste gekrümmte Bereich (64) an die Vorspannfläche (61) anschließt.

3. Bremsbelag nach Anspruch 2, **dadurch gekennzeichnet, dass** sich von wenigstens einem der zweiten gegensinnig gekrümmten Bereiche (65) eine relativ zum Abstützbereich (62, 63) angewinkelte Zunge (67) erstreckt.

4. Bremsbelag nach einem der vorstehenden Ansprüche, **dadurch gekennzeichnet, dass** ein erster Abstützbereich (62) des Federelements (6) durch einen sich in Richtung (A) senkrecht zu den parallelen Krümmungsachsen (K) erstreckenden Aufnahmeschlitz (66) in zwei Abstützstege (62a, 62b) aufgeteilt ist, wobei sich der Aufnahmeschlitz (66) unter Ausbildung der das Halteelement (5) zumindest teilweise umgreifenden Aussparung zumindest bis in die Vorspannfläche (61) erstreckt.

5. Bremsbelag nach Anspruch 4, **dadurch gekennzeichnet, dass** der Aufnahmeschlitz (66) eine geradlinigen Einführungsabschnitt mit konstanter Schlitzbreite (bs) aufweist.

6. Bremsbelag nach Anspruch 4, **dadurch gekennzeichnet, dass** der Aufnahmeschlitz (66) einen Einführungsabschnitt mit variierender Schlitzbreite (bs) aufweist.

7. Bremsbelag nach einem der Ansprüche 4 bis 6, **dadurch gekennzeichnet, dass** der Aufnahmeschlitz (66) sich bis in den zweiten Abstützbereich (63) erstreckt.

8. Bremsbelag nach Anspruch 7, **dadurch gekennzeichnet, dass** der Aufnahmeschlitz (66) drei Schlitzbereiche (661, 662, 663) aufweist, die durch Engstellen (b_{S1}, b_{S2}) voneinander getrennt sind.

9. Bremsbelag nach einem der Ansprüche 1 bis 3, **dadurch gekennzeichnet, dass** die Aussparung in der Vorspannfläche (61) des Federelements (6) als ein Kopfteil (53) des Halteelements (5) vollständig umgreifende Aufnahmeöffnung (68) ausgebildet ist.

10. Bremsbelag nach einem der vorstehenden Ansprüche, **dadurch gekennzeichnet, dass** das Federelement (6) mit einem Kopfteil (53) des Halteelements (5) vernietet ist.

11. Bremsbelag nach einem der vorstehenden Ansprüche, **dadurch gekennzeichnet, dass** die Federelement (6) in jeweiligen Ausnehmungen (21) des Belagträgers (2) auf einer den Trägerblechen (3) abgewandten Seite aufgenommen sind, in die die jeweiligen Öffnungen (22) des Belagträgers (2) münden, wobei die Ausnehmungen (21) so bemessen sind, dass das jeweilige Federelement (6) in der Ebene eines Bodens (24) der Ausnehmung (21) in alle Richtungen verschiebbar ist.

12. Anordnung eines Bremsbelags (1) einer Teilbelag-Scheibenbremse eines Schienenfahrzeuges an einem Belaghalter, **dadurch gekennzeichnet, dass** der Bremsbelag (1) gemäß einem der vorhergehenden Ansprüche ausgebildet ist.

## Claims

1. Brake lining (1) for a partially lined disc brake of a rail vehicle, having
- a lining carrier (2),
- multiple carrier metal sheets (3) mounted spherically on the lining carrier (2),
- multiple friction elements (4) mounted spherically on the respective carrier metal sheet (3),
- wherein each of the friction elements (4) has a retaining element (5) passing through an opening (32) of the carrier metal sheet (3) and an opening (22) of the lining carrier (2), on which retaining element a spring element (6) is supported, wherein each of the friction elements (4) is braced relative to the lining carrier (2) by means of the spring element (6),
**characterized in that**
- the spring element (6) is configured as a leaf spring preformed by uniaxially curved regions (64, 65) having parallel axes of curvature (K),
- wherein the spring element (6) has a preloading surface (61), from which support regions (62, 63) extend on both sides in a direction (A) perpendicular to the parallel axes of curvature (K),
- wherein the preloading surface (61) has a recess which at least partially surrounds the retaining element (5).

2. Brake lining according to claim 1, **characterized in that** each of the support regions (62, 63) has a first curved region (64) and a second region (65) curved in the opposite direction, wherein the first curved region (64) adjoins the preloading surface (61).

3. Brake lining according to claim 2, **characterized in that** a tongue (67), angled relative to the support region (62, 63), extends from at least one of the second, oppositely curved regions (65).

4. Brake lining according to any one of the preceding claims, **characterized in that** a first support region (62) of the spring element (6) is divided into two support webs (62a, 62b) by a receiving slot (66) extending in direction (A) perpendicular to the parallel axes of curvature (K), wherein the receiving slot (66) extends at least as far as the preloading surface (61), forming the recess that at least partially surrounds the retaining element (5).

5. Brake lining according to claim 4, **characterized in that** the receiving slot (66) has a straight insertion section with a constant slot width (bₛ).

6. Brake lining according to claim 4, **characterized in that** the receiving slot (66) has an insertion section with a varying slot width (bₛ).

7. Brake lining according to any one of claims 4 to 6, **characterized in that** the receiving slot (66) extends into the second support region (63).

8. Brake lining according to claim 7, **characterized in that** the receiving slot (66) has three slot regions (661, 662, 663) which are separated from one another by constrictions (bₛ₁, bₛ₂).

9. Brake lining according to any one of claims 1 to 3, **characterized in that** the recess in the preloading surface (61) of the spring element (6) is configured as a receiving opening (68) which completely surrounds a head portion (53) of the retaining element (5).

10. Brake lining according to any one of the preceding claims, **characterized in that** the spring element (6) is riveted to a head portion (53) of the retaining element (5).

11. Brake lining according to any one of the preceding claims, **characterized in that** the spring elements (6) are received in respective recesses (21) of the lining carrier (2) on a side facing away from the carrier metal sheets (3), into which the respective openings (22) of the lining carrier (2) open, wherein the recesses (21) are dimensioned such that the respective spring element (6) is displaceable in all directions in the plane of a base (24) of the recess (21).

12. Assembly of a brake lining (1) of a partially lined disk brake of a rail vehicle on a lining carrier, **characterized in that** the brake lining (1) is formed according to any one of the preceding claims.

## Revendications

1. Garniture de frein (1) pour un frein à disque à garniture partielle d'un véhicule ferroviaire, présentant
- un support de garniture (2),
- plusieurs tôles de support (3) montées de manière sphérique au niveau du support de garniture (2),
- plusieurs éléments de friction (4) montés de manière sphérique au niveau de la tôle de support respective (3),
- dans laquelle chacun des éléments de friction (4) présente un élément de maintien (5) traversant une ouverture (32) de la tôle de support (3) et une ouverture (22) du support de garniture (2), élément de maintien au niveau duquel un élément à ressort (6) est supporté, dans laquelle chacun des éléments de friction (4) est précontraint au moyen de l'élément à ressort (6) par rapport au support de garniture (2),
**caractérisée en ce que**
- l'élément à ressort (6) est conçu en tant que ressort à lames préformé avec des zones (64, 65) courbées selon un seul axe avec des axes de courbure parallèles (K),
- dans laquelle l'élément à ressort (6) présente une surface de précontrainte (61) à partir de laquelle s'étendent des zones d'appui (62, 63) de part et d'autre, dans une direction (A) perpendiculairement aux axes de courbure parallèles (K),
- dans laquelle la surface de précontrainte (61) présente un évidement entourant au moins partiellement l'élément de maintien (5).

2. Garniture de frein selon la revendication 1, **caractérisée en ce que** chacune des zones d'appui (62, 63) présente une première zone courbée (64) et une seconde zone courbée dans le sens opposé (65), dans laquelle la première zone courbée (64) se raccorde à la surface de précontrainte (61).

3. Garniture de frein selon la revendication 2, **caractérisée en ce qu'**une languette (67) formant un angle par rapport à la zone d'appui (62, 63) s'étend à partir d'au moins une des secondes zones (65) courbées dans le sens opposé.

4. Garniture de frein selon l'une quelconque des revendications précédentes, **caractérisée en ce qu'**une première zone d'appui (62) de l'élément à ressort (6) est divisée en deux nervures d'appui (62a, 62b) s'étendant à travers une fente de réception (66) s'étendant dans une direction (A) perpendiculairement aux axes de courbure parallèles (K), dans laquelle la fente de réception (66) s'étend en formant l'évidement entourant l'élément de maintien (5) au moins partiellement au moins jusque dans la surface de précontrainte (61).

5. Garniture de frein selon la revendication 4, **caractérisée en ce que** la fente de réception (66) présente une section d'introduction linéaire avec une largeur de fente (bₛ) constante.

6. Garniture de frein selon la revendication 4, **caractérisée en ce que** la fente de réception (66) présente une section d'introduction avec une largeur de fente (bₛ) variable.

7. Garniture de frein selon l'une quelconque des revendications 4 à 6, **caractérisée en ce que** la fente de réception (66) s'étend jusque dans la seconde zone d'appui (63).

8. Garniture de frein selon la revendication 7, **caractérisée en ce que** la fente de réception (66) présente trois zones de fente (661, 662, 663) qui sont séparées les unes des autres par le biais de rétrécissements (bₛ₁, bₛ₂₎).

9. Garniture de frein selon l'une quelconque des revendications 1 à 3, **caractérisée en ce que** l'évidement est conçu dans la surface de précontrainte (61) de l'élément à ressort (6) en tant qu'ouverture de réception (68) entourant intégralement une partie supérieure (53) de l'élément de maintien (5).

10. Garniture de frein selon l'une quelconque des revendications précédentes, **caractérisée en ce que** l'élément à ressort (6) est riveté à une partie supérieure (53) de l'élément de maintien (5).

11. Garniture de frein selon l'une quelconque des revendications précédentes, **caractérisée en ce que** les éléments à ressort (6) sont logés dans des évidements respectifs (21) du support de garniture (2) sur un côté opposé aux tôles de support (3) dans lequel débouchent les ouvertures respectives (22) du support de garniture (2), dans laquelle les évidements (21) sont dimensionnés de sorte que l'élément à ressort respectif (6) puisse être déplacé dans toutes les directions dans le plan d'un fond (24) de l'évidement (21).

12. Agencement d'une garniture de frein (1) d'un frein à disque à garniture partielle d'un véhicule ferroviaire au niveau d'un support de garniture, **caractérisé en ce que** la garniture de frein (1) est conçue selon l'une quelconque des revendications précédentes.
